(19) Europäisches Patentamt
European Patent Office
Office européen des brevets

(11) **EP 2 999 072 B1**

(12) **EUROPÄISCHE PATENTSCHRIFT**

(45) Veröffentlichungstag und Bekanntmachung des Hinweises auf die Patenterteilung:
**25.08.2021 Patentblatt 2021/34**

(51) Int Cl.:
*H02G 3/18* (2006.01)   *H01R 4/00* (2006.01)
*H02G 3/32* (2006.01)

(21) Anmeldenummer: **15185313.2**

(22) Anmeldetag: **15.09.2015**

(54) **KABELZUGENTLASTUNG**

CABLE STRAIN RELIEF

DECHARGE DE TRACTION DE CABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.09.2014 DE 102014113265**

(43) Veröffentlichungstag der Anmeldung:
**23.03.2016 Patentblatt 2016/12**

(73) Patentinhaber: **Trilux GmbH & Co. KG**
**59759 Arnsberg (DE)**

(72) Erfinder: **Marquas, Karsten**
**59757 Arnsberg (DE)**

(74) Vertreter: **Lippert Stachow Patentanwälte Rechtsanwälte Partnerschaft mbB Postfach 30 02 08 51412 Bergisch Gladbach (DE)**

(56) Entgegenhaltungen:
EP-A2- 0 780 923      DE-A1-102006 061 213
DE-A1-102011 106 432      DE-U1- 20 004 983
DE-U1- 20 018 199      FR-B1- 2 811 818

## Beschreibung

Die Erfindung betrifft eine Kabelzugentlastung, insbesondere zur Verwendung in einer Leuchte, mit einem Basisteil, das einen Gegenhalter zur Fixierung einer einen Leitungsdurchmesser aufweisenden Leitung innerhalb der Zugentlastung aufweist, einem mit dem Basisteil über Primärrastmittel verbindbaren Klemmbügel, welcher an einem Vorderende ein Primärrastende ausgebildet zur Befestigung an dem Basisteil, einen sich daran entlang einer Bügellängsachse anschließenden Klemmabschnitt, ausgebildet zum Einklemmen der Leitung in Einbaulage und ein sich an den Klemmabschnitt in Bügellängsachse anschließendes Sekundärrastende an einem Hinterende mit Sekundärrastmitteln ausgebildet zur Befestigung mit dem Basisteil aufweist, so dass der Klemmbügel durch Ausübung einer durch einen Benutzer aufzubringende Anpresskraft in eine die Leitung unlösbar einklemmende Klemmstellung überführbar ist.

## Stand der Technik

Derartige Zugentlastungen werden auch als Leitungsklemmen bezeichnet und sind beispielsweise aus dem europäischen Patent EP 1 137 140 B1 bekannt. Die in dieser Schrift offenbarte Vorrichtung umfasst ein Basisteil mit einem in Einbaulage den Befestigungsabschnitt überbrückenden, als Brückenteil ausgebildeten Klemmbügel, welcher eine sich quer zur Längserstreckungsrichtung der Zugentlastungsvorrichtung verlaufende Leitung in dem mittigen Klemmabschnitt einfasst und fixiert. Zu diesem Zweck sind zwischen dem Basisteil und dem Brückenteil an den Randbereichen, also an dem Primärbefestigungsende und dem Sekundärbefestigungsende komplementär ausgebildete Rastmittel vorgesehen, welche durch Aufsetzen des Brückenteils auf das Basisteil und Aufbringen der Anpresskraft miteinander in Wirkverbindung kommen, so dass die Rastmittel einander in Einbaulage hintergreifen.

## Nachteile am Stand der Technik

Obgleich diese Vorrichtung bereits eine gute Befestigung ermöglicht, hat diese doch gewisse Nachteile. Zum einen baut die in dieser Schrift Offenbarte Zugentlastung relativ hoch auf und erfordert insofern für die Montage insofern eine gewisse Bauhöhe bzw. einen Freiraum, um das Brückenteil nach Einsetzen der Leitung von oben auf das Basisteil aufsetzen zu können, wozu der Freiraum zumindest so groß sein muss wie die Höhe der beiden seitlichen Schenkel, welche außenseitig die Rastmittel bzw. Rastlaschen umfassen. Dieser Freiraum ist aber auch notwendig, damit ein Benutzer die notwendige Anpresskraft aufbringen kann, welche üblicherweise vertikal nach unten als Normalkraft auf den zwischen den Rastlaschen ausgebildeten Klemmabschnitt von oben aufgebracht werden muss, bis dieser oberseitig auf die einzuklemmende Leitung aufliegt.

Insofern muss nicht nur der gesamte Anpressweg der Rastlaschen überwunden werden, was bei kleineren Kabeldurchmessern recht viel Kraft erforderlich machen kann und was insbesondere in Bauräumen und bei der Überkopfmontage problematisch sein kann. Dabei wird mitunter aber auch eine zu große Anpresskraft aufgebracht, was dazu führen kann, dass der Klemmbügel von einem Benutzer zu fest angepresst wird und somit eine Beschädigung der Isolierung der Leitung auftritt. Insofern kann das Kabel durch zu hohe Klemmenkräfte beschädigt werden, was dann eine komplette Demontage der Leitungstechnik nach sich zieht. Schließlich können durch unvermeidliche Toleranzen der Bauteile unterschiedliche Anpress- und Befestigungskräfte auftreten, die entweder eine Beschädigung der Leitung oder eine nicht ausreichende Fixierung der Leitung nach sich zieht. Kabelzugentlastungen sind beispielsweise aus der DE 200 18 199 U1, DE 10 2006 061 213 A1, DE 10 2011 106 432 A1 und EP 0 780 923 A2 bekannt. Kabelzugentlastungen anderer Art sind aus der DE 200 04 983 U1 sowie der FR 2 811 818 bekannt.

## Aufgabe

Ausgehend von dem eingangs genannten Stand der Technik und der damit verbundenen Nachteile liegt der Erfindung somit die Aufgabe bzw. das technische Problem zu Grunde, eine gattungsgemäße Zugentlastung derart weiterzuentwickeln, dass die zuvor dargelegten Nachteile zumindest teilweise vermieden werden und insbesondere eine Kabelzugentlastung vorzusehen, die nur einen geringen Bauraum benötigt, trotzdem aber die erforderliche Anpresskraft für die Fixierung der Leitung in Einbaulage aufbringt und bei der in jedem Fall eine Beschädigung des Mantels der Leitung durch eine zu hohe Anpresskraft wirksam verhindert wird.

## Erfindung

Diese Aufgabe wird bei der erfindungsgemäßen Zugentlastung gemäß Anspruch 1 dadurch gelöst, dass das Primärrastende eine Einführungsöffnung ausgebildet zur Einführung der Leitung bzw. des Kabels umfasst, dass der Klemmabschnitt versetzt in Richtung des Primärrastendes angeordnet ist, dass der Klemmabschnitt quer zu der Bügellängsachse erstreckende Klemmrippen umfasst, dass der Bügel so an dem Primärrastende des Basisteils vorfixierbar ist, dass dieses Vorfixieren als Drehpunkt beim Aufbringen der Anpresskraft für ein Endfixieren fungiert und dass die Primärrastmittel mehrere komplementär ausgebildete bzw. miteinander in Einbaulage zusammenwirkende Rastlaschen umfassen.

Die Erfindung schlägt eine Klemmvorrichtung vor, bei welcher das Kabel zunächst an dem Primärrastende in die Einführungsöffnung eingeführt, der Klemmbügel mit den Primärrastmitteln des Basisteils verbunden wird durch Aufschieben von vorne, so dass in dieser Position bereits eine Vorfixierung der Leitung in der Kabelzugentlastung in der gewünschten Sollposition realisiert wird und sodann der Anpressdruck auf den Klemmbügel aufgebracht wird, um diesen aus seiner - angehobenen - Vorfixierungsstellung in die - abgesenkte - Klemmstellung in Einrastlage zu überführen, in welcher die Sekundärrastmittel zwischen Klemmbügel und Basisteil miteinander in Eingriff kommen, um das Endfixieren der Leitung zu realisieren. Somit wird also beim Niederdrücken des Klemmbügels zur Endfixierung ein Drehmoment entsprechend der Distanz zwischen dem eingreifenden Primärrastmittel am Primärrastende und der Länge des Klemmbügels bzw. dem Punkt der Aufbringung der Anpresskraft auf den Klemmbügel auf den Drehpunkt gebildet durch die ineinander eingreifenden bzw. einander hintergreifenden Primärrastmittel aufgebracht, welches natürlich die für die Endfixierung aufzubringende Anpresskraft im Vergleich zum Stand der Technik erheblich reduziert durch den bestehenden Hebelarm. Vorzugsweise sind das Basisteil und der Klemmbügel derart geometrisch aufeinander abgestimmt, dass die vom Benutzer aufgebrachte Anpresskraft verdrei- bis verfünffacht wird. Bei der besonders bevorzugten Ausführungsform wird bei einer auf den Klemmabschnitt wirkenden Klemmkraft von etwa 360N eine Fixierung gegen eine Zugkraft von 120N auf das Kabel in Längsachse realisiert. Durch die versetzte Anordnung des Klemmabschnitts zum Primärrastende wirkt auf diesen der Hebelarm des Klemmbügels, womit die Endfixierung des Kabels mit geringerer Anpresskraft durch den Benutzer realisierbar ist.

Die Zugentlastung ist erfindungsgemäß selbstregulierend ausgebildet, als die Klemmkraft bzw. der Klemmweg durch die geometrischen Verhältnisse der Zugentlastung im Zusammenspiel mit dem variierenden Kabeldurchmesser bestimmt wird, was bisher nicht möglich war. Somit wird für das jeweilige Kabel immer die optimale Klemmkraft realisiert, ohne dass es zu einer Beschädigung des Kabels kommen könnte. Wesentlich ist aber auch, dass der Durchmesser der einzuklemmenden Leitung bestimmt, in welche Zacke der der Zugentlastung das Klemmteil an dem Basisteil beim Vorfixieren eingreift, so dass diese dann optimiert auf den Kabeldurchmesser abgestimmt ist, um das Endfixieren unlösbar und ohne Leitungsbeschädigung zu verwirklichen.

Durch die erfindungsgemäße Ausbildung wird somit eine Beschädigung der Kabelisolierung dadurch vermieden, dass durch das Aufbringen der Anpresskraft und das Überführen in die Schließstellung nur der dem Hebelarm entsprechende Drehmoment auf den Klemmabschnitt im Bereich des Kabeleinführungsendes an dem Primärrastende wirkt. Dieses wird bei einer bevorzugten Ausführungsform durch einen Anschlag zwischen Klemmbügel und Basisteil unterstützt, die ein zu weites Herunterdrücken des Klemmbügels gegenüber dem Basisteil wirksam unterbindet.

Durch die zumindest teilweise, vorzugsweise vollständige Fertigung der Teile der Zugentlastung aus Kunststoff kann ein inhärenter Berührungsschutz realisiert sein, also wirksam ausgeschlossen werden, dass ein Benutzer unbeabsichtigt mit spannungsführenden Leitungen in Verbindung gelangt.

Da im Vergleich zum Stand der Technik keine Schrauben für die Endfixierung benötigt werden und auch keine Anziehung von Schrauben erforderlich ist, ist die Anzahl der erforderlichen Bauteile gegenüber dem Stand der Technik erheblich reduziert und ermöglicht gleichzeitig eine einfache Montage mit geringer Kraft, was insbesondere in beengten Bausituationen und bei der Überkopfmontage von Bedeutung ist.

Durch den Durchmesser des einzuklemmenden Kabels wird bestimmt welches der mehreren Primärrastmittel am Primärrastende für die Vorfixierung miteinander in Eingriff kommen. Diese Wirkverbindung bzw. dieses Wirkungspaar der beiden Rastmittel zwischen Klemmbügel und Basisteil ist dann aber automatisch derart optimiert, dass bei der Überführung des Klemmbügels in die Endlage lediglich noch die erforderliche Anpresskraft für die Endbefestigung aufgebracht wird, jedenfalls aber keine derartige Anpresskraft aufgebracht wird, welche zu einer Beschädigung der Ummantelung des Kabels führen könnte.

Bevorzugte Durchmesser des Kabels liegen zwischen 8 und 13mm, wobei die Zugentlastung dann eine bevorzugte Länge von 60mm, eine Tiefe von etwa 30mm und eine Höhe von 18mm mit einer Einführungsöffnung von 13mm aufweist.

Zur optimierten Anpassung an verschiedene Leitungsdurchmesser umfassen die Primärrastmittel mehrere komplementär ausgebildete bzw. miteinander in Einbaulage zusammenwirkende Rastlaschen. Dabei ist es durchaus so, dass an dem einen Part weniger Rastmittel vorgesehen sind und an dem Gegenpart entsprechend mehrere komplementäre Rastmittel, welche mit den Rastmitteln des ersten Parts angepasst an den Leitungsdurchmesser dann jeweils in Eingriff kommen. Die bevorzugte Ausbildung umfasst mehrere Rastlaschen an einem Raststeg des Klemmbügels. Um den Zusammenbau der Zugentlastung in beengten Bauräumen und für ungeübtes Personal zu vereinfachen, können diese Positionierhilfsmittel für die Fixierung des Klemmbügels am Basisteil umfassen. Vorzugsweise sind diese Positionierhilfsmittel ausgebildet als Positionierlaschen, welche in Erstreckungsrichtung der Einführungsöffnung von dem Basisteil nach vorne abragend und ausgebildet sind zum Hintergreifen des Klemmbügels in Einbaulage. Vorzugsweise sind diese Positionierlaschen beidseitig erstreckend an der Seitenwand des Basisteilgehäuses ausgebildet und umfassen am Vorderende Nasen bzw. Vorsprünge, in welche das untere Ende des Klemmbügels in Einbaulage eingreift, wodurch die Rotation des Klemmbügels im Verhältnis zu dem Basisteil unterstützt wird.

Bei der bevorzugten Ausführungsform fungieren diese Positionierhilfsmittel ferner als Fixierungsmittel, welche ein unbeabsichtigtes Lösen der Rastmittel zwischen Klemmbügel und Basisteil in Einbaulage verhindern, also ein unbeabsichtigtes Abziehen des Klemmbügels im Verhältnis zum Basisteil nach vorne. Eine besondere Art der Verliersicherung und ein Schutz gegen unbeabsichtigte Demontage wird dadurch erzielt, dass die Sekundärrastmittel zwischen Klemmbügel und Basisteil in Einbaulage an der Innenseite des Basisteils wirken bzw. in dieses eingreifen. Dabei hat sich als besonders vorteilhaft erwiesen, die Sekundärrastmittel als Rastlaschen auszubilden, welche innenseitig in das Basisteil eingreifen. Vorzugsweise greifen diese Rastlaschen in Wände des Basisteils ein, welche dann zusätzlich Lösungsöffnungen aufweisen, durch welche die Rastlaschen durch Eindrücken gelöst werden können.

Eine besonders stabile Ausführungsform wird dadurch erzielt, dass das Basisteil ausgebildet ist zur Aufnahme des Klemmbügels. Die besonders bevorzugte Ausführungsform sieht eine gehäuseartige Ausbildung des Basisteils als quaderförmigen Kasten vor und der Klemmbügel ist als ein das Gehäuse in Einbaulage verschließendes bzw. komplettierendes Bauteil ausgebildet, vorzugsweise als im Wesentlichen L-förmiges Bauteil mit einem eine Anpressfläche definierenden Längsschenkel und einem am Vorderende quer zur Ebene des Längsschenkels ragenden Querschenkel. Dieser ist wie ein Deckel auf das Basisteil aufsetzbar und mit diesem verbindbar ist, dass das Basisteil und der so gebildete Klemmendeckel in Einbaulage einen geschlossenen, quaderförmigen Körper bilden, welcher an seiner Vorderseite die Einführungsöffnung für die Leitung aufweist.

Die Zugentlastung kann ausgebildet sein zur Aufnahme einer Anschlussklemme. Vorzugsweise erfolgt dieses durch entsprechende Ausbildung des Basisteils, z.B. durch Ausbildung eines Klemmraums zur Aufnahme einer Klemme, die an einem elektrischen Gerät, z.B. einer Leuchte, vorgesehene ist. Bei der besonders bevorzugten Ausführungsform erfolgt dieses durch eine Öffnung in dem Basisteil, die auf die Klemme aufsetzbar ist, vorzugsweise spielfrei, sodass die Zugentlastung gleichzeitig an dem elektrischen Gegenstand positioniert ist.

Eine weitere Ausführungsform sieht in der Zugentlastung eine Ausgangsöffnung vor, vorzugsweise am Sekundärende, durch welche das Kabel durch die Zugentlastung hindurchgeführt werden kann, z.B. zu einer Anschlussklemme.

Für die Vereinfachung der Montage ist es vorteilhaft, wenn die Zugentlastung Verbindungsmittel umfasst, mit welchem diese an einem Gegenpart befestigbar ist, z.B. einem Leuchtengehäuse, einem elektrischen Bauteil oder dergleichen. Diese Verbindungsmittel umfassen vorzugsweise Rastnasen, welche bei der Montage in entsprechende Befestigungsöffnungen an dem jeweiligen Gegenpart einsetzbar sind und in Einbaulage diese Öffnungen rastend hintergreifen. Besonders bevorzugt sind diese Verbindungsmittel an dem Sekundärende ausgebildet, können jedoch auch an anderen Stellen der Zugentlastung und insbesondere dem Basisteil vorgesehen sein. Somit ist also eine werkzeuglose Montage realisierbar.

Bislang wurde die Zugentlastung als getrenntes Bauteil beschrieben, welches z.B. mittels einer Klemmvorrichtung oder durch Anschrauben mit einer Leuchte oder einem anderen Gerät verbindbar ist. Es liegt jedoch auch im Rahmen der Erfindung, die Zugentlastung einteilig mit einer Leuchte auszubilden, das Basisteil also einstückig an einem Gehäuse vorzusehen, z.B. durch Anspritzen im Falle der Fertigung aus Kunststoff.

Ein bevorzugtes Ausführungsbeispiel der Erfindung ist in den Zeichnungen beispielhaft und nicht beschränkend dargestellt und wird im Folgenden näher beschrieben. Es zeigen:

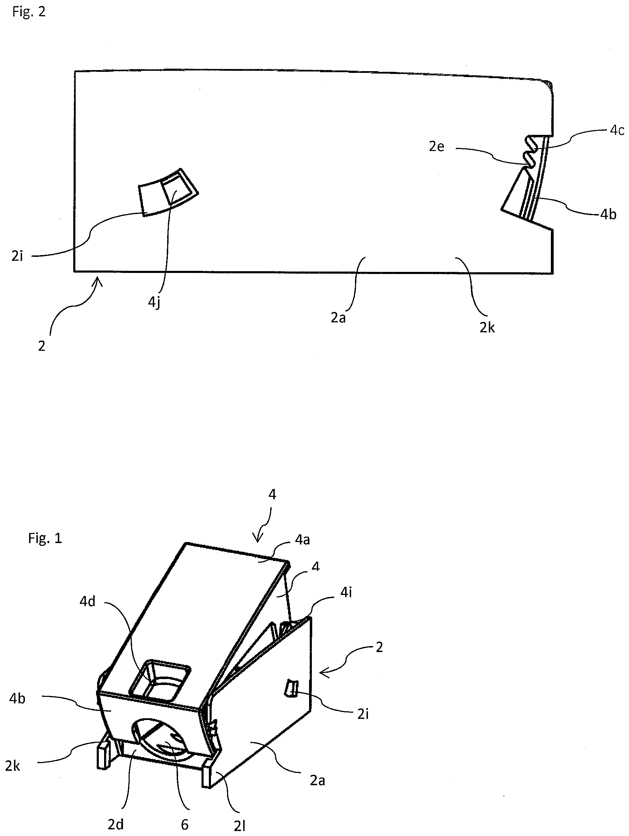

Fig. 1     eine perspektivische Frontansicht der teilweise geöffneten Zugentlastung;

Fig. 2     eine vergrößerte Seitenansicht der Zugentlastung gemäß Figur 1 im geschlossenen Zustand;

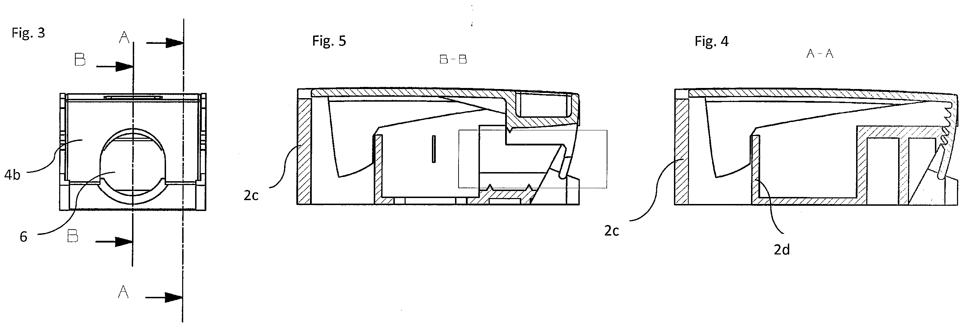

Fig. 3     eine Stirnansicht der Zugentlastung gemäß Figur 2 mit einem als Klemmendeckel ausgebildeten Klerambügel in Ruhestellung;

Figur 4     ein Längsschnitt der Zugentlastung entlang der Linie A-A gemäß Figur 3;

Figur 5     einen Längsschnitt der Zugentlastung entlang der Linie B-B gemäß Figur 3;

Figur 6     eine Stirnansicht der Zugentlastung bei eingesetztem Kabel mit einem Durchmesser von 9mm;

Figur 7     einen Längsschnitt der Zugentlastung entlang der Linie C-C gemäß Figur 6;

Figur 8     einen Längsschnitt der Zugentlastung entlang der Linie D-D gemäß Figur 6

Figur 9     eine Stirnansicht der Zugentlastung bei angehobenem Klemmdeckel in Öffnungsstellung;

Figur 10     einen Längsschnitt entlang der Linie E - E gemäß Fig. 9;

Figur 11     ein Längsschnitt entlang der Linie F - F gemäß Figur 9;

Figur 12     eine perspektivische Ansicht einer alternativen Ausbildung der Zugentlastung ausgebildet zum Verbinden mit einem Vorschaltgerät;

Figur 13     die mit dem Kopfende des Vorschaltgeräts befestigte Zugentlastung gemäß Fig. 12 in Öffnungsstellung; und

Figur 14 die mit dem Kopfende des Vorschaltgeräts befestigte Zugentlastung gemäß Fig. 12 in Schließstellung.

Gleiche oder gleichwirkende Teile sind mit denselben Bezugszeichen versehen. In der folgenden ausführlichen Beschreibung wird auf die beigefügten Zeichnungen Bezug genommen, die Teil dieser bilden und in denen zur Veranschaulichung spezifische Ausführungsformen gezeigt sind, in der die Erfindung ausgeübt werden kann. Die folgende ausführliche Beschreibung ist nicht im einschränkenden Sinne aufzufassen. Im Rahmen dieser Beschreibung werden die Begriffe "verbunden", "angeschlossen" sowie "integriert" verwendet zum Beschreiben sowohl einer direkten als auch einer indirekten Verbindung, eines direkten oder indirekten Anschlusses sowie einer direkten oder indirekten Integration. In den Figuren werden identische oder ähnliche Elemente mit identischem Bezugszeichen versehen, soweit dieses zweckmäßig ist. Die Darstellungen in den Figuren sind im Übrigen im Wesentlichen maßstäblich. Zur Veranschaulichung von Details können jedoch bestimmte Bereiche für den Fachmann erkennbar übertrieben groß dargestellt sein. Darüber hinaus können die Zeichnungen plakativ vereinfacht sein und enthalten nicht jedes bei der praktischen Ausführung gegebenenfalls vorhandene Detail.

Demnach besteht die Zugentlastung im Wesentlichen aus einem kastenförmigen Basisteil 2 sowie einem an dieses angepasste und auf das Basisteil aufsetzbaren Klemmdeckel 4, so dass Basisteil 2 und Klemmdeckel 4 in zusammengesetztem Zustand einen Rechtkant (Quader) definieren.

Der Klemmdeckel 4 und das Basisteil 2 sind beide als Kunststoffspritzgussteil ausgebildet, vorzugsweise aus PB, PCB oder einem anderen geeigneten Kunststoff.

Das Basisteil 2 ist somit als in der Draufsicht quaderförmiges Gehäuse mit zwei sich in Längserstreckungsrichtung parallel zueinander erstreckenden Seitenwänden 2a, 2b ausgebildet, die über zwei sich ebenfalls parallel zueinander erstreckende Querwände voneinander beabstandet sind. Die in Einbaulage hintere Querwand 2c schließt mit dem Ende des Basisteils 2 ab, wohingegen die vordere Querwand 2d in das Innere des Basisteils versetzt angeordnet ist, um etwa ein Drittel der Länge des Basisteils 2.

Zwischen der hinteren Querwand 2c und der vorderer Querwand 2d ist noch eine sich parallel zur hinteren Querwand 2c erstreckende mittlere Querwand 2m ausgebildet, welche mit der hinteren Querwand 2c einen durch eine Zugangsöffnung in der Unterseite zugänglichen Klemmraum zur Aufnahme einer Anschlussklemme (nicht dargestellt) definiert. In diesem Klemmraum ist somit eine mit dem Gegenpart verbundene Anschlussklemme aufnehmbar und kann mit den Enden der Leitung verbunden werden.

Die vordere Querwand 2c weist mittig eine vorliegend kreiszylindrische Einführungsöffnung 6 auf, die gebildet wird durch eine untere Halbschale 2e an der Innenseite des Basisteils 2 sowie einer oberen Halbschale 4k an der Innenseite des Klemmdeckels 4. Diese beiden Halbschalen 2e, 4k bilden somit zusammen in Einbaulage die kreiszylindrische Einführungsöffnung 6 mit veränderbarem Querschnitt zur lagefixierenden Aufnahme unterschiedlicher Kabeldurchmesser.

Der Klemmdeckel 4 besteht aus einem in Einbaulage eine obere Anpressfläche definierenden Längsschenkel 4a, an dessen in Einbaulage vorderen Ende ein quer zur Ebene der Anpressfläche ragender Vorderschenkel 4b angeformt ist, welcher zudem von dem an dem am Längsschenkel 4a befestigten Ende nach hinein gekrümmt ist bzw. nach innen verläuft. An der Innenseite dieses Vorderschenkels 4b sind insgesamt fünf Deckelrastnasen 4c ausgebildet, welche mit insgesamt zwei Basisrastnasen 2f an der Vorderseite des Basisteils 2 in Einbaulage komplementär zum Bilden der primären Rastverbindung zusammenwirken bzw. sich gegenseitig in Einbaulage hintergreifen.

Sich anschließend an das Vorderende 2d der Zugentlastung ist auf der Innenseite sich anschließend an die Stoßstelle zwischen Oberteil 4a und Vorderschenkel 4b die obere Halbschale 4k in Form einer Vertiefung ausgeformt, die an ihrem hinteren Ende versetzt zum Innenraum der Zugentlastung eine obere Fixierungsrippe 4d aufweist, die sich somit quer erstreckt zur Längserstreckungsrichtung der Zugentlastung, also parallel zum Vorderschenkel 4b verläuft. Auch quer erstreckend zur Längserstreckungsrichtung der unteren Halbschale 2e weist diese zwei zueinander beabstandete, angeformte untere Fixierungsrippen 2g, 2h auf. Anstelle der Fixierungsrippen könnten die Halbschalen 2e, 4k zum Erzielen der unverlierbaren Fixierung der Leitung in Einbaulage z.B. auch konisch ausgebildet sein.

Am hinteren Ende weist der Längsschenkel 4a des Klemmdeckels 4 jeweils seitlich zwei zur Ebene des Längsschenkels nach unten erstreckende Seitenwände 4e, 4f auf, die zum hinteren Ende in der Höhe zunehmen und so am hinteren Ende zwei seitlich nach unten ragende Federlaschen 4g, 4h bilden, die an ihrem unteren Ende Rastnasen aufweisen, die in Einbaulage in Rastöffnungen 2i, 2j in den Seitenwänden 2a, 2b eingreifen, um den Klemmdeckel 4 in Schließ- bzw. Klemmlage, also bei in der Einführungsöffnung 6 eingeklemmtem Kabel mit dem Basisteil 2 in Einbaulage zu verrasten, womit diese also die sekundären Rastmittel zwischen Basisteil 2 und Klemmdeckel 4 bilden.

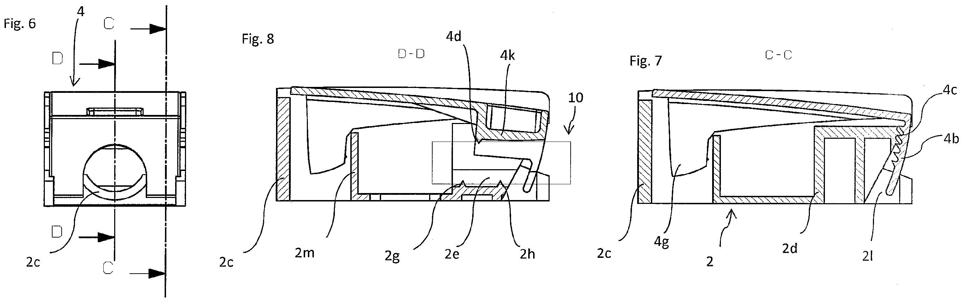

Die Figuren 6 - 8 zeigen ein Positionsbeispiel mit einem 9mm dicken Kabel 10 im geschlossenen Zustand, welches in der Figur 7 lediglich durch ein Quadrat angedeutet ist. Deutlich ist hier zu erkennen, dass bei dieser Einbausituation der Klemmdeckel 4 mit seinen obersten Deckelrastnasen 4c in die komplementären Basisrastnasen 2f am Vorderende des Basisteils 2 eingreift und der Klemmdeckel 4 somit tiefer liegt, um somit die positionsgenaue Fixierung des Kabels 10 in der Einführungsöffnung 6 dadurch zu gewährleisten, dass die Fixierungsrippen 2g, 2h, 4d an den Halbschalen 2e, 4k ausreichend in das Kabel eindringen, um dieses positionsgenau zu fixieren, jedoch ohne die Isolierung des Kabels 10 zu beschädigen. Dieses wird zudem dadurch gewährleistet, dass das hintere Ende des Längsschenkels 4a des Klemmdeckels 4 auf der Oberseite der hinteren Querwand 2c aufliegt, welche somit als Anschlag fungiert.

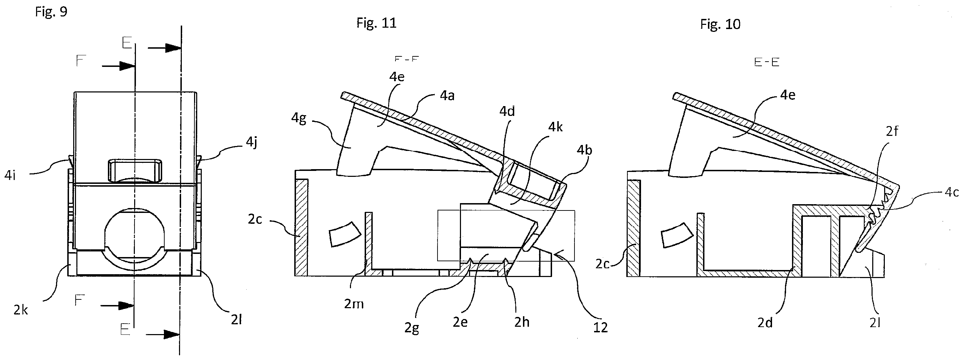

Die Figuren 9 - 11 zeigen hingegen ein Positionsbeispiel im geöffneten Zustand zur Aufnahme eines Kabels 12 mit 12 mm Durchmesser im geöffneten Zustand, welches wieder durch ein Rechteck angedeutet ist. In diesem Fall greifen wegen dem größeren Durchmesser des Kabels 12 die unteren der Deckelrastnasen 4c in den Basisrastnasen 2f ein und bilden somit den Dreh- bzw. Kraftangriffspunkt zwischen Klemmdeckel 4 und Basisteil 2, so dass der Klemmdeckel 4 verhältnismäßig hoch im Basisteil 2 aufgenommen ist.

In Längserstreckungsrichtung als Fortsätze sind ein Paar Positionierlaschen 2k, 2l beidseitig der Einführungsöffnung 6 nach vorne erstreckend an den Seitenwänden 2a, 2b angeformt, die an ihren Vorderenden hakenartig ausgebildet sind, um so Positionierhilfsmittel für das untere Ende des Vorderschenkels 4b in Einbaulage zu fungieren und gleichzeitig ein unbeabsichtigtes Lösen des Klemmdeckels 4 durch Anheben des Vorderschenkels 4b zu unterbinden. Diese Positionierlaschen 2k, 2l dienen ferner als Anschläge bzw. Drehpunkt zur Drehung des Klemmdeckels 4 in Einbaulage.

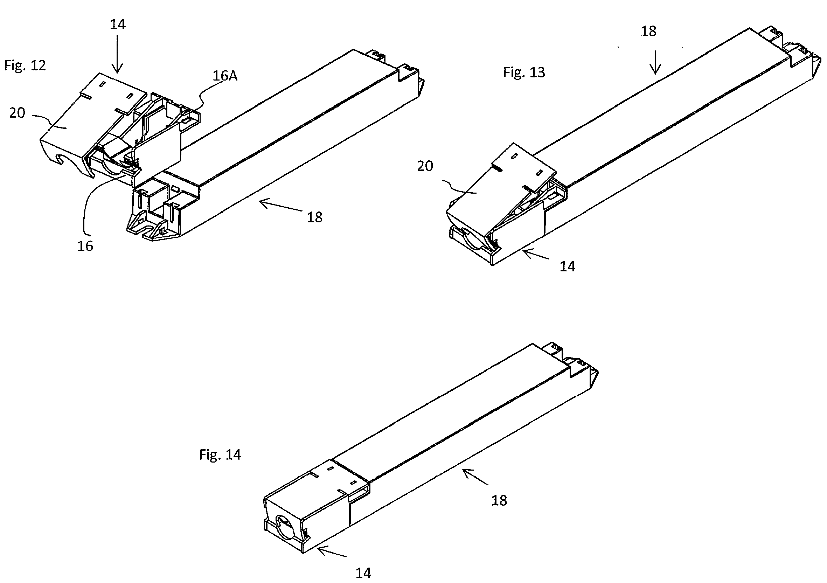

Die in den Figuren 12 bis 14 dargestellte weitere Ausführungsform der Zugentlastung 14 weist an seinem in Einbaulage hinteren Ende des Basisteils 16 angeformten Montagesteg 16A auf, der auf dem oberen Ende des stirnseitigen Absatzes eines Vorschaltgeräts 18 in Einbaulage aufliegt. Zwischen der Rückseite des Basisteils 16 und der Stirnseite des Vorschaltgeräts 18 ist eine Schwalbenschwanzverbindung ausgeführt, so dass die Zugentlastung 14 durch Aufschieben auf das stirnseitige Vorderende des Vorschaltgeräts 18 unverlierbar mit diesem verbindbar ist. Die geometrische Ausgestaltung ist so gestaltet, dass der Klemmdeckel 20 gemäß der Darstellung in Figur 14 in Schließstellung durchgängig mit der Oberseite des Vorschaltgeräts 18 abschließt und somit einen einheitlich, harmonischen Kubus bildet.

Bei einer weiteren Lösung ist in der hinteren Querwand 2c und der mittleren Querwand 2m eine kolienear verlaufende Ausgangsöffnung ausgebildet, durch welche die Leitung durch die Zugentlastung hindurchgeführt werden kann.

Zu bemerken ist, dass durch die gewählten geometrischen Abmessungen des Klemmdeckels 4 mit langem Längsschenkel 4a und dem Vorderschenkel 4b eine selbstfixierende Bauweise realisiert wird, wobei der eingesetzte Hebelarm die vom Benutzer aufzubringende Anpresskraft reduziert, und zwar nach der Gleichung:

$$F_2 = l2/l1 * F_2,$$

mit

$F_1$ = Klemmkraft in der Einführungsöffnung;
$F_2$ = vom Benutzer aufzubringende Anpresskraft;
$l_1$ = Länge von dem vorderen Ende des Klemmdeckels bis zur oberen Fixierungsrippe 4d bzw. bis zum Mitte der Einführungsöffnung; und
$l_2$ = Länge des Längsschenkels vom Vorderende gemessen. Das Vorderende ist dabei der Drehpunkt bzw. Punkt des Eingriffs der Primärrastmittel.

Zusammenfassend benötigt die erfindungsgemäße Kabelzugentlastung gegenüber Lösungen im Stand der Technik weniger Teile. Das Anziehen von Schrauben entfällt und die Kabelzugentlastung ist insofern schnell zu montieren durch einfaches Schließen bzw. Herunterdrücken zum Aufbringen der Anpresskraft. Durch die definierten geometrischen Verhältnisse wird eine für den jeweiligen Kabeldurchmesser optimierte Klemmkraft ohne Beschädigung der Isolierung durch zu festes Anpressen realisiert.

**Bezugszeichenliste**

| | |
|---|---|
| 2 | Basisteil |
| 2a,b | Seitenwand |
| 2c | hintere Querwand |
| 2d | vordere Querwand |
| 2e | untere Halbschale |
| 2f | Basisrastnasen |
| 2g | untere Fixierungsrippe |
| 2h | untere Fixierungsrippe |
| 2i,j | Rastöffnung |
| 2k,l | Positionierlasche |
| 2m | mittlere Querwand |
| 4 | Klemmdeckel |
| 4a | Längsschenkel |
| 4b | Vorderschenkel |
| 4c | Deckelrastnasen |
| 4d | obere Fixierungsrippe |
| 4e | Seitenwand |
| 4f | Seitenwand |
| 4g | Federlasche |
| 4h | Federlasche |
| 4i,j | Rastnase |
| 4k | obere Halbschale |
| 6 | Einführungsöffnung |
| 10 | 9mm Kabel |
| 12 | 12mm Kabel |
| 14 | Zugentlastung |
| 16 | Basisteil |
| 16A | Montagesteg |
| 18 | Vorschaltgerät |

20    Klemmdeckel

**Patentansprüche**

1.    Kabelzugentlastung, insbesondere zur Verwendung in einer Leuchte, mit einem Basisteil (2), das einen Gegenhalter zur Fixierung einer einen Leitungsdurchmesser aufweisenden Leitung innerhalb der Zugentlastung aufweist, einem mit dem Basisteil (2) über Primärrastmittel verbindbaren Klemmbügel, welcher an einem Vorderende ein Primärrastende ausgebildet zur Befestigung an dem Basisteil (2), einen sich daran entlang einer Bügellängsachse anschließenden Klemmabschnitt ausgebildet zum Einklemmen der Leitung in Einbaulage, wobei diese eine Einführungsöffnung (6) an dem Primärrastende zur Ausbildung eines Kabeleinführungsendes umfasst, wobei der Klemmabschnitt versetzt zum Primärrastende angeordnet ist und quer zu der Bügellängsachse erstreckende Klemmrippen umfasst und wobei die Primärrastmittel am Primärrastende mehrere komplementär ausgebildete und miteinander in Einbaulage zusammenwirkende Rastlaschen umfassen, **DADURCH GEKENNZEICHNET, dass** der Klemmbügel selbstregulierend in Abhängigkeit von dem Leitungsdurchmesser so an dem Basisteil (2) vorfixierbar ist, dass diese Vorfixierung als Drehpunkt beim Aufbringen der Anpresskraft wirkt und dass der Klemmbügel ein sich an den Klemmabschnitt in Bügellängsachse anschließendes Sekundärrastende an einem Hinterende mit Sekundärrastmitteln ausgebildet zur Befestigung mit dem Basisteil (2) aufweist, so dass der Klemmbügel durch Ausübung einer durch einen Benutzer aufzubringenden Anpresskraft in eine die Leitung unlösbar einklemmende Klemmstellung überführbar ist.

2.    Kabelzugentlastung nach Anspruch 1, **DADURCH GEKENNZEICHNET, DASS** die Primärrastmittel mehrere komplementär ausgebildete Rastlaschen umfassen und dass der Leitungsdurchmesser bestimmt, welche dieser Rastlaschen beim Vorfixieren des Klemmbügels am Basisteil zum Eingriff kommen.

3.    Kabelzugentlastung nach Anspruch 2, **DADURCH GEKENNZEICHNET, DASS** an dem Klemmbügel mehr Rastlaschen vorgesehen sind als an dem Basisteil (2).

4.    Kabelzugentlastung nach einem der vorhergehenden Ansprüche, **DADURCH GEKENNZEICHNET, DASS** zwischen Basisteil (2) und Klemmbügel Positionierhilfsmittel für die Fixierung des Klemmbügels am Basisteil (2) ausgebildet sind.

5.    Kabelzugentlastung nach Anspruch 4, **DADURCH**

**GEKENNZEICHNET, DASS** die Positionierhilfsmittel ferner fungieren, um ein unbeabsichtigtes Lösen der Rastmittel am Primärrastende zu unterbinden.

6.    Kabelzugentlastung nach einem der vorhergehenden Ansprüche, **DADURCH GEKENNZEICHNET, DASS** die Sekundärrastmittel in Einbaulage an der Innenseite des Basisteils (2) eingreifen.

7.    Kabelzugentlastung nach Anspruch 6, **DADURCH GEKENNZEICHNET, DASS** die Sekundärrastmittel mindestens eine Federlasche (4g, 4h) umfassen.

8.    Kabelzugentlastung nach einem der vorhergehenden Ansprüche, **DADURCH GEKENNZEICHNET, DASS** das Basisteil (2) zur Aufnahme des Klemmbügels ausgebildet ist.

9.    Kabelzugentlastung nach einem der vorhergehenden Ansprüche, **DADURCH GEKENNZEICHNET, DASS** diese als mit einer Leuchte verbindbares Bauteil ausgebildet ist.

**Claims**

1.    Cable strain relief, in particular for use in a luminaire, having a base part (2) which has a mating holder for fixing a cable having a cable diameter within the strain relief, a clamping bracket which can be connected to the base part (2) via primary latching means, which has at a front end a primary latching end designed for fastening to the base part (2), a clamping section adjoining the primary latching end along a longitudinal axis of the bracket and designed for clamping the line in the installed position, the latter comprising an insertion opening (6) at the primary latching end for forming a cable insertion end, wherein the clamping section is arranged offset from the primary latching end and comprises clamping ribs extending transversely to the longitudinal axis of the bracket, and wherein the primary latching means at the primary latching end comprise a plurality of latching lugs of complementary design and cooperating with one another in the installed position, **CHARACTERIZED IN THAT** the clamping bracket can be pre-fixed to the base part (2) in a self-adjusting manner as a function of the cable diameter, **in that** this pre-fixing acts as a pivot point when applying a pressing force, and **in that** the clamping bracket has a secondary latching end adjoining the clamping section in the longitudinal axis of the bracket at a rear end and designed with secondary latching means for fastening to the base part (2), so that the clamping bracket can be transferred into a clamping position in which the cable is clamped in a non-releasable manner by exerting a pressing force to be applied by a user.

**2.** Cable strain relief according to claim 1, **CHARACTERIZED IN THAT** the primary latching means comprises a plurality of complementary latching lugs and that the cable diameter determines which of these latching lugs are engaged when the clamping bracket is pre-fixed to the base part.

**3.** Cable strain relief according to claim 2, **CHARACTERIZED IN THAT** more latching lugs are provided on the clamping bracket than on the base part (2).

**4.** Cable strain relief according to one of the preceding claims, **CHARACTERIZED IN THAT** positioning aids for fixing the clamping bracket to the base part (2) are formed between the base part (2) and the clamping bracket.

**5.** Cable strain relief according to claim 4, **CHARACTERIZED IN THAT** the positioning aids further function to prevent unintentional release of the latching means at the primary latching end.

**6.** Cable strain relief according to any one of the preceding claims, **CHARACTERIZED IN THAT** the secondary latching means engage the inside of the base part (2) in the installed position.

**7.** Cable strain relief according to claim 6, **CHARACTERIZED IN THAT** the secondary la 8. cable strain relief according to any of the preceding claims, **CHARACTERIZED IN THAT** the base part (2) is designed to receive the clamping bracket.

**8.** Cable strain relief according to any of the preceding claims, **CHARACTERIZED IN THAT** the base part (2) is designed to receive the clamping bracket.

**9.** Cable strain relief according to one of the preceding claims, **CHARACTERIZED IN THAT** it is designed as a component which can be connected to a luminaire.

**Revendications**

**1.** Dispositif de décharge de traction de câble, en particulier pour l'utilisation dans un luminaire, avec une partie de base (2) qui présente un contre-support pour la fixation d'une ligne présentant un diamètre de ligne à l'intérieur du dispositif de décharge de traction, un étrier de serrage qui peut être relié à la partie de base (2) par des moyens d'encliquetage primaires, qui présente à une extrémité avant une extrémité d'encliquetage primaire formée pour la fixation à la partie de base (2), une section de serrage attenante à l'extrémité d'encliquetage primaire le long d'un axe longitudinal de l'étrier et formée pour serrer la ligne dans la position installée, cette dernière comprenant une ouverture d'insertion (6) à l'extrémité d'encliquetage primaire pour former une extrémité d'insertion de câble, dans lequel la section de serrage est disposée de manière décalée par rapport à l'extrémité d'encliquetage primaire et comprend des nervures de serrage s'étendant transversalement à l'axe longitudinal de l'étrier, et dans lequel les moyens d'encliquetage primaires au niveau de l'extrémité d'encliquetage primaire comprennent une pluralité de pattes d'encliquetage de conception complémentaire qui coopèrent les unes avec les autres dans la position installée, **CARACTÉRISÉ EN CE QUE** l'étrier de serrage peut être pré-fixé à la partie de base (2) de manière auto-ajustée en fonction du diamètre du câble de telle sorte que cette préfixation fonctionne comme un point de pivot pendant l'application de la pression de contact et que l'étrier de serrage présente une extrémité d'encliquetage secondaire se raccordant à la section de serrage dans l'axe longitudinal de l'étrier à une extrémité arrière avec des moyens d'encliquetage secondaires conçus pour être fixés à la partie de base (2), de sorte que l'étrier de serrage peut être transféré dans une position de serrage dans laquelle la ligne est serré de manière non détachable en exerçant une pression de contact à appliquer par un utilisateur.

**2.** Dispositif de décharge de traction de câble selon la revendication 1, **CARACTERISE EN CE QUE** les moyens d'encliquetage primaires comprennent une pluralité de pattes d'encliquetage de conception complémentaire, et **en ce que** le diamètre de la ligne détermine lesquelles de ces pattes d'encliquetage sont engagées lorsque l'étrier de serrage est préfixé à la partie de base.

**3.** Dispositif de décharge de traction de câble selon la revendication 2, **CARACTÉRISÉ EN CE QUE** plus de pattes d'encliquetage sont prévues que sur la partie de base (2).

**4.** Dispositif de décharge de traction de câble selon l'une quelconque des revendications précédentes, **CARACTÉRISÉ EN CE QUE** des aides au positionnement pour fixer l'étrier de serrage à la partie de base (2) sont formées entre la partie de base (2) et l'étrier de serrage.

**5.** Dispositif de décharge de traction de câble selon la revendication 4, **CARACTERISE EN CE QUE** les aides au positionnement fonctionnent en outre pour empêcher une libération non intentionnelle des moyens d'encliquetage à l'extrémité d'encliquetage primaire.

**6.** Dispositif de décharge de traction de câble selon l'une quelconque des revendications précédentes, **CARACTÉRISÉ EN CE QUE** les moyens d'encliquetage secondaires s'engagent sur le côté intérieur de la partie de base (2) dans la position installée.

7.  Dispositif de décharge de traction de câble selon la revendication 6, **CARACTÉRISÉ EN CE QUE** les moyens d'encliquetage secondaires comprennent au moins une patte à ressort (4g, 4h).

8.  Dispositif de décharge de traction de câble selon l'une quelconque des revendications précédentes, **CARACTÉRISÉ EN CE QUE** la partie de base (2) est conçue pour recevoir l'étrier de serrage.

9.  Dispositif de décharge de traction de câble selon l'une quelconque des revendications précédentes, **CARACTÉRISÉ EN CE QU'**elle est formée comme un composant pouvant être connecté à un luminaire.

Fig. 2

Fig. 1

Fig. 4

A–A

2d

2c

Fig. 5

B–B

2c

Fig. 3

A

B

B

A

4b

6

Fig. 6

Fig. 8

Fig. 7

D-D

C-C

4d

4k

10

4c

4b

2c

2m

2g

2e

2h

2c

4g

2

2d

2l

4

2c

EP 2 999 072 B1

12

Fig. 9

Fig. 11

Fig. 10

F - F

E - E

EP 2 999 072 B1

13

Fig. 13

Fig. 12

Fig. 14

**EP 2 999 072 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1137140 B1
- DE 20018199 U1
- DE 102006061213 A1
- DE 102011106432 A1
- EP 0780923 A2
- DE 20004983 U1
- FR 2811818